# EUROPEAN PATENT SPECIFICATION

(11) **EP 2 765 340 B1**
(45) Date of publication and mention of the grant of the patent: **30.09.2015**
(21) Application number: 13154341.5
(22) Date of filing: 07.02.2013
(51) Int. Cl.: F16K 1/30, F16K 17/04

(54) **A valve, a residual pressure valve, a regulator and a tap comprising such a valve**
Ventil, Restdruckventil, Regler und Armatur mit einem derartigen Ventil
Soupape, soupape de pression résiduelle, régulateur et robinet comprenant une telle soupape

(43) Date of publication of application: 13.08.2014
(73) Proprietor: L'AIR LIQUIDE, SOCIETE ANONYME POUR L'ETUDE ET L'EXPLOITATION DES PROCEDES GEORGES CLAUDE, 75007 Paris (FR)
(72) Inventor: Bendazzoli,Silvano, 37134 Verona (IT); Ferronato,Luca, 37139 Verona (IT); Pezzo, Ivan, 370036 San Martino Buon Albergo (IT)
(74) Representative: De Cuenca, Emmanuel Jaime

(56) References cited:
- FR-A1- 2 141 496
- GB-A- 1 319 764
- US-A- 3 586 037
- US-A- 3 885 589
- US-A- 4 719 940
- US-A- 5 443 083
- US-A1- 2002 092 575
- US-A1- 2011 088 793

## Description

The invention concerns a valve, a residual pressure valve, a regulator and a tap comprising such a valve.

The invention deals more particularly with a valve, in particular for pressurized gas cylinder tap, comprising a body enclosing a gas passage, an obturator mobile in the gas passage along an upstream/downstream direction with respect to a seat, the obturator being mobile between a first and upstream position closing the gas passage and a second and downstream position opening the gas passage, the valve comprising a return organ urging the obturator toward the upstream first position, the obturator comprising an oblong shaped body, the return organ comprising a compression spring mounted on the obturator's body, the compression spring comprising an upstream end pressing on a supporting surface of the obturator and a downstream end pressing on a support ring sliding mounted around the obturator's body, the position of the support ring (7) in the gas passage being blocked in the downstream direction by a fixed abutment (8) located in the gas passage..

Medical or industrial gas applications uses valves including obturators for controlling gas pressure and flow. Such valves may be used in pressure regulators, residual pressure valves...

Standard valves generally consist in a mobile obturator urge by an elastic element (generally a return spring). Damping forces are generally negligible and all related to the gas dynamic. The system is then a low damped harmonic oscillator.

In some applications, it often happens that, for a combination of pressure drop and gas type, the mobile obturator's fluttering and chattering become notable and audible. Those phenomena are generally created by a dynamic instability of gas-structural interactions.

Document US3885589A discloses a cock and pressure reducer unit comprising a valve according to the preamble of claim 1 and including a pneumatic vibration damper comprising a leakage orifice about a stem, a ring seal, a thrust washer and a spring, wherein the valve comprises a deformable damping element located on the obturator's body between the support ring and the abutment.

One objective of the present invention is to solve at least partially one of the problems above mentioned.

To this goal, the cylinder valve according to the invention, in other respects in accordance to the generic definition given by the above preamble, is characterized in that
- the damping element comprises an O-Ring made of at least one of the following material: plastic, rubber,and in that
- the abutment comprises a conical surface converging toward the downstream direction, the damping element being urged on said conical surface by the support ring pushed by the return organ.

Furthermore, embodiments might include one or several of the features below:
- the support ring comprises a washer made of at least on of the following materials: copper, copper alloy, steel, steel alloy, nickel, nickel alloy, aluminium, aluminium alloy, PTFE, Polyamide, ABS, Polypropylene, metallic materials, thermoplastic materials, rubbers,
- the support ring is flexible in the radial direction perpendicular to the upstream/downstream direction,
- the extreme downstream end of the obturator is located in a blind hole located in the bottom of the abutment,
- the upstream end of the obturator comprises a seal for a selective sealing cooperation with the seat when the obturator is in its first position,
- the support ring is cut at one of its side allowing it to be flexible in the radial direction perpendicular to the upstream/downstream direction,
- the abutment belongs to a plug mounted into the valve body,
- the pressure residual valve is located upstream the first pressure regulator,
- the residual pressure valve is located downstream the first pressure regulator.

The invention may also concern a residual pressure valve comprising a valve according to any of above of below features.

The invention may also concern a pressure regulator comprising a pressure reducing mechanism for lowering a gas pressure between in high pressure inlet and a low pressure outlet, wherein the pressure reducing mechanism comprises a valve according to any of the above of below features.

The invention may also concern a pressurized gas cylinder tap comprising a body including a mounting end for attachment in the opening of a pressurized fluid cylinder, a internal withdrawing circuit comprising a first upstream end coming out at the mounting end and a second downstream end coming out at a outlet port located on the body, the withdrawing circuit comprising, arranged in series, an isolation valve and a residual pressure valve, wherein the residual pressure valve is conform to the valve of any of the features above or below.

The invention may comprise also at least on the features below:
- the withdrawing circuit comprises a first pressure regulator in series with the residual pressure valve,
- said first pressure regulator comprises a pressure reducing mechanism for lowering a gas pressure between in high pressure inlet and an low pressure outlet, said pressure reducing mechanism comprising a valve according to any of the features above or below.
- the withdrawing circuit comprises a second pressure regulator in series with the first pressure regulator,
- the withdrawing circuit comprises a pressure residual valve in series between the two pressure regulators.

The invention may also concern any device or method comprising any combination of features below of above mentioned.

Other features and advantages will be apparent to the reading of the below description, made with reference to the drawings wherein:
- figure 1 depicts a longitudinal cut view of a possible example of valve according to the invention in a closed position,
- figure 2 depicts a similar view of the valve of figure 1 in an open position,
- figure 3 depicts schematically and partially a possible structure of the internal circuit of the cylinder tap embodying the invention and mounted on a cylinder.

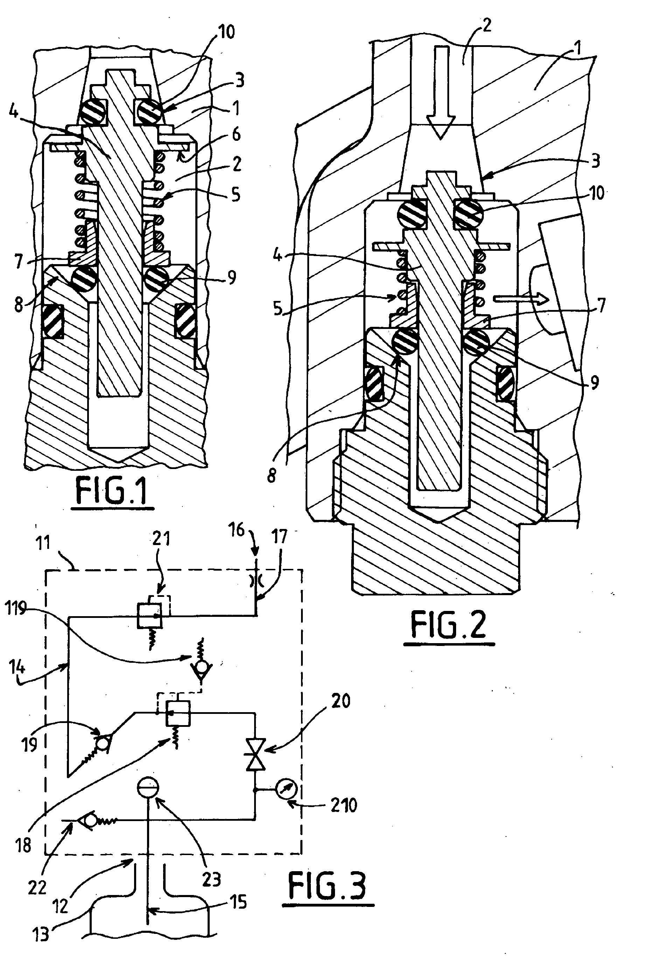

As shown on figures 1 and 2, the valve comprises a body 1 enclosing a gas passage 2. The gas passage 2 comprises an upstream end (at the top of figures 1 and 2) that may be connected to high pressure gas reserve and a downstream end (to be connected to a gas outlet).

The valve comprises an obturator 4 mobile in the gas passage 2 along an upstream/downstream direction with respect to a seat 3. For example, the seat 3 is located upstream and comprises on conical portion converging from downstream to upstream. Preferably, the obturator 4 is mobile in translation in the gas passage 2 along the upstream/downstream direction. The obturator 4 is mobile between a first and upstream position closing the gas passage 2 (figure 1) and a second and downstream position opening the gas passage 2 (figure 2).

As disclosed, the upstream end of the obturator 4 may comprise an o-ring 10 for a selective sealing cooperation with the seat 3 when the obturator 4 is in its first position.

When the obturator 4 is in its second (open) position, the gas is able to blow from upstream (top of figures) to downstream (for example via a lateral opening in the body 1, the flow being shown by the arrows on figure 2).

The valve comprises a return organ 5 urging the obturator 4 toward the upstream first position, for example a compression spring. For example, the obturator 4 comprises an oblong shaped body, the compression spring being mounted around said oblong body. The spring 5 comprises an upstream end pressing on a supporting surface 6 of the obturator 4 (for example an edge projecting radially on the obturator's body).

The downstream end of the spring 5 presses on a support ring 7 sliding mounted around the obturator's body. The downstream position of the support ring 7 in the gas passage 2 is blocked in the downstream direction by a fixed abutment 8 located in the gas passage 2. According to an advantageous feature, a deformable damping element 9 is located on the obturator's body between the support ring 7 and the abutment 8. This means that the support ring 7 is not in direct contact with the abutment 8, the contact with the abutment is made by means of the damping element 9.

This arrangement damps the system's dynamic and reduces or avoids vibration transmission to neighbouring components.

Preferably, the support ring 7 and o-ring 9 are able to slide in the obturator's 4 body. For example the support ring 7 is flexible in the radial direction perpendicular to the upstream/downstream direction. For example, the support ring 7 is cut at one of its side (longitudinally for example) making it flexible in the radial direction perpendicular to the upstream/downstream sliding direction.

The support ring 7 comprises for example a washer made of at least on of the following materials:-copper, copper alloy, steel, steel alloy, nickel, nickel alloy, aluminium, aluminium alloy, PTFE, Polyamide, ABS (Acrylonitrile Butadiene Styrene), Polypropylene, metallic materials, thermoplastic materials, rubbers.

As seen on figure 1, in the closed position (stable position), the spring 5 is compressed between the supporting surface 6 of the obturator 4 and the abutment. This forces the obturator 4 toward the upstream closed position.

When the gas pressure upstream exceeds the compression force of the spring, the obturator 4 is pushed downstream and opens the passage 2 (see figure 2). The damping element 9 remains pushed against the abutment 8 by means of the spring via the support ring 7. During this movement the supporting ring 7 and o-ring 9 slide along the obturator 4.

The damping element 9 is compressed against the abutment 8 and reduces the vibrations of the obturator 8.

The abutment 8 comprises a conical surface converging toward the downstream direction. The extreme downstream end of the obturator 4 may be located in a blind hole situated in the bottom of the abutment (the exit for the gas being lateral in the passage 2). This arrangement generates a preset friction force on the obturator 4 and less vibrations. The abutment 8 may belong to a plug mounted into the valve body 1.

This valve arrangement may be used in a residual pressure valve device and/or in a gas pressure regulator device.

Figure 3 depicts a possible example of pressurized gas cylinder 13 comprising a tap including such a valve.

The tap comprises a body 11 including a mounting end 12 for attachment in the opening of a pressurized fluid cylinder 13 The body contains an internal withdrawing circuit 14 comprising a first upstream end 15 coming out at the mounting end 12 and a second downstream end 16 coming out at a outlet port 17 located on the body 1.

The withdrawing circuit 14 comprises for example, arranged in series from upstream (connected to the cylinder storage volume 13) to downstream (to the outlet port 17): an isolation valve 20, a first pressure regulator 18, a residual pressure valve 19, a second pressure regulator 21. The residual pressure valve 19 located between the two pressure regulators 18, 21 may be conform to the valve described above. Each pressure regulator 18, 21 comprises a pressure reducing mechanism for lowering a gas pressure between in high pressure inlet and a low pressure outlet.

As depicted on figure 3, at least the first pressure regulator 18 may comprise a pressure relief valve 119. According to an advantageous feature, the pressure reducing mechanism of one or both pressure regulator 18 and 21 may comprise a valve according to the valve type described above.

The tap may comprise also a gauge 210 located on the withdrawing circuit 14, upstream of the isolation valve 20. A separate filling circuit 22 may be provided also.

An optional safety device such as a bursting disc 23 may be provided in the withdrawing circuit 14, upstream of the isolation valve 20. As illustrated, this bursting disc 23 may be common with a portion of the filling circuit 22.

Of course the valve disclosed with reference to the examples of figure 1 can be used in other arrangement especially other type of taps. For example such a residual pressure valve may be used in cylinder tap including only one pressure regulator or in a cylinder not including a pressure regulator. The residual pressure valve may be located upstream or downstream an isolation valve or upstream or downstream a pressure regulator.

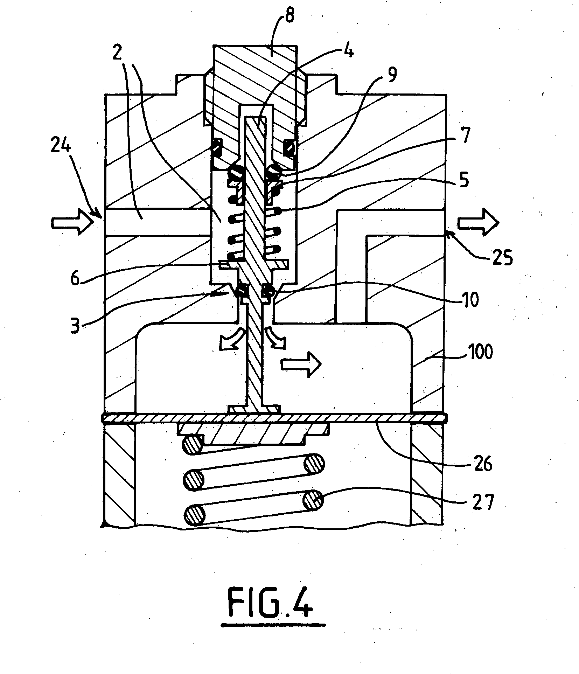

In addition, the valve described above may be used in a pressure reducing mechanism. Figure 4 depicts an example of a pressure reducing mechanism located in a body 100 in gas passage 2, between an inlet 24 and an outlet 25.

The same valve elements described above are name by the same numeral references. In this embodiment, the upstream end of the obturator 4 (cooperating with the seat 3 extends beyond the opening of the seal 3 and is connected to a diaphragm 27 urged by a spring 27. The obturator 4 is subjected to the opposite efforts of, on the one hand, the gas pressure (coming from the inlet) and, on the other hand, the diaphragm and spring.

The valve mechanism is a pressure regulator lowering the gas pressure of the gas entering the inlet 24. The gas pressure delivered to the outlet is lowered to a determined value (the flow of gas is illustrated by arrows).

## Claims

1. A valve, in particular for pressurized gas cylinder tap, comprising a body (1) enclosing a gas passage (2), an obturator (4) mobile in the gas passage (2) along an upstream/downstream direction with respect to a seat (3), the obturator (4) being mobile between a first and upstream position closing the gas passage (2) and a second and downstream position opening the gas passage (2), the valve comprising a return organ (5) urging the obturator (4) toward the upstream first position, the obturator (4) comprising an oblong shaped body, the return organ (5) comprising a compression spring mounted on the obturator's body, the compression spring (5) comprising an upstream end pressing on a supporting surface (6) of the obturator (4) and a downstream end pressing on a support ring (7) sliding mounted around the obturator's body, the position of the support ring (7) in the gas passage (2) being blocked in the downstream direction by a fixed abutment (8) located in the gas passage (2), wherein the valve comprises a deformable damping element (9) located on the obturator's body between the support ring (7) and the abutment (8) **characterised in that** the damping element (9) comprises an O-Ring made of at least one of the following material: plastic, rubber, and the abutment (8) comprises a conical surface converging toward the downstream direction, the damping element (9) being urged on said conical surface by the support ring (7) pushed by the return organ (5).

2. A valve according to claim 1, wherein the support ring (7) comprises a washer made of at least on of the following materials: copper, copper alloy, steel, steel alloy, nickel, nickel alloy, aluminium, aluminium alloy, PTFE, Polyamide, ABS, Polypropylene, metallic materials, thermoplastic materials, rubbers.

3. A valve according to any of claims 1 to 2, wherein the support ring (7) is flexible in the radial direction perpendicular to the upstream/downstream direction.

4. A valve according to any of claims 1 to 3, wherein the extreme downstream end of the obturator (4) is located in a blind hole located in the bottom of the abutment (8).

5. A valve according to any of claims 1 to 4, wherein the upstream end of the obturator (4) comprises a seal (10) for a selective sealing cooperation with the seat (3) when the obturator (4) is in its first position.

6. A residual pressure valve **characterized in that** it comprises a valve according to any of claims 1 to 5.

7. A pressure regulator comprising a pressure reducing mechanism for lowering a gas pressure between in high pressure inlet and a low pressure outlet, **characterized in that** the pressure reducing mechanism comprises a valve according to any of claim 1 to 5.

8. A pressurized gas cylinder tap comprising a body (11) including a mounting end (12) for attachment in the opening of a pressurized fluid cylinder (13), a internal withdrawing circuit (14) comprising a first upstream end (15) coming out at the mounting end (12) and a second downstream end (16) coming out at a outlet port (17) located on the body (1), the withdrawing circuit (14) comprising, arranged in series, an isolation valve (20) and a residual pressure valve (19), **characterized in that** the residual pressure valve (19) is conform to the valve of any of claims 1 to 6.

9. A pressurized gas cylinder tap according to claim 10, wherein the withdrawing circuit (14) comprises a first pressure regulator (18) in series with the residual pressure valve (19).

10. A pressurized gas cylinder tap according to claims 9, wherein said first pressure regulator (18) comprises a pressure reducing mechanism for lowering a gas pressure between in high pressure inlet and an low pressure outlet, said pressure reducing mechanism comprising a valve according to any of claim 1 to 7.

11. A pressurized gas cylinder tap according to any of claims 9 to 10, wherein the withdrawing circuit (14) comprises a second pressure regulator (21) in series with the first pressure regulator (18).

12. A pressurized gas cylinder tap according to claim 11, wherein the withdrawing circuit (14) comprises a pressure residual valve (19) in series between the two pressure regulators (18, 21).

## Patentansprüche

1. Ventil, insbesondere für einen Gasdruckzylinderhahn, einen Hauptteil (1) umfassend, der einen Gasdurchlass (2) umschließt, ein Absperrorgan (4), das im Gasdurchlass (2) im Verhältnis zu einem Sitz (3) in prozessauf-/prozessabwärtiger Richtung beweglich ist, wobei das Absperrorgan (4) zwischen einer ersten und prozessaufwärtigen Position, in der der Gasdurchlass (2) verschlossen ist, und einer zweiten und prozessabwärtigen Position, in der der Gasdurchlass (2) geöffnet ist, beweglich ist, wobei das Ventil ein Rückstellorgan (5) umfasst, welches das Absperrorgan (4) hin zur prozessaufwärtigen ersten Position drängt, wobei das Absperrorgan (4) einen länglich geformten Hauptteil umfasst, wobei das Rückstellorgan (5) eine Kompressionsfeder umfasst, die an den Hauptteil des Absperrorgans montiert ist, wobei die Kompressionsfeder (5) ein prozessaufwärtiges Ende umfasst, das auf eine Stützfläche (6) des Absperrorgans (4) drückt, und ein prozessabwärtiges Ende, das auf einen Stützring (7) drückt, der gleitfähig um den Hauptteil des Absperrorgans montiert ist, wobei die Position des Stützrings (7) im Gasdurchlass (2) in der prozessabwärtigen Richtung durch einen feststehenden Anschlag (8) arretiert ist, der im Gasdurchlass (2) angeordnet ist, wobei das Ventil ein verformbares Dämpfungselement (9) umfasst, das zwischen dem Stützring (7) und dem Anschlag (8) auf dem Hauptteil des Absperrorgans angeordnet ist, **dadurch gekennzeichnet, dass** das Dämpfungselement (9) einen O-Ring umfasst, der aus mindestens einem der folgenden Materialien besteht: Kunststoff, Kautschuk, und der Anschlag (8) eine konische Fläche umfasst, die sich in prozessabwärtiger Richtung verjüngt, wobei das Dämpfungselement (9) durch den Stützring (7), der durch das Rückstellorgan (5) gedrückt wird, auf die konische Fläche gedrängt wird.

2. Ventil nach Anspruch 1, wobei der Stützring (7) eine Unterlegscheibe umfasst, die aus mindestens einem der folgenden Materialien besteht: Kupfer, Kupferlegierung, Stahl, Stahllegierung, Nickel, Nickellegierung, Aluminium, Aluminiumlegierung, PTFE, Polyamid, ABS, Polypropylen, Metallmaterialien, Thermoplastmaterialien, Kautschuken.

3. Ventil nach einem der Ansprüche 1 bis 2, wobei der Stützring (7) in radialer Richtung senkrecht zur prozessauf-/prozessabwärtigen Richtung flexibel ist.

4. Ventil nach einem der Ansprüche 1 bis 3, wobei das äußere prozessabwärtige Ende des Absperrorgans (4) in einer Blindöffnung angeordnet ist, die im Boden des Anschlags (8) angeordnet ist.

5. Ventil nach einem der Ansprüche 1 bis 4, wobei das prozessaufwärtige Ende des Absperrorgans (4) eine Dichtung (10) zum wahlweisen abdichtenden Zusammenwirken mit dem Sitz (3) umfasst, wenn sich das Absperrorgan (4) in seiner ersten Position befindet.

6. Restdruckventil, **dadurch gekennzeichnet, dass** es ein Ventil nach einem der Ansprüche 1 bis 5 umfasst.

7. Druckregler, einen Druckminderungsmechanismus zum Senken eines Gasdrucks zwischen einem Hochdruckeinlass und einem Niedrigdruckauslass umfassend, **dadurch gekennzeichnet, dass** der Druckminderungsmechanismus ein Ventil nach einem der Ansprüche 1 bis 5 umfasst.

8. Gasdruckzylinderhahn, einen Hauptteil (11) umfassend, der ein Montageende (12) zum Anbringen in der Öffnung eines Fluiddruckzylinders (13) beinhaltet, wobei eine interne Ausscheideschaltung (14) ein erstes, prozessaufwärtiges Ende (15) umfasst, das am Montageende (12) herauskommt, und ein zweites, prozessabwärtiges Ende (16), das an einem am Hauptteil (1) angeordneten Auslassanschluss (17) herauskommt, wobei die Ausscheideschaltung (14) ein Isolationsventil (20) und ein Restdruckventil (19) umfasst, die in Reihe angeordnet sind, **dadurch gekennzeichnet, dass** das Restdruckventil (19) mit dem Ventil nach einem der Ansprüche 1 bis 6 übereinstimmt.

9. Gasdruckzylinderhahn nach Anspruch 10, wobei die Ausscheideschaltung (14) einen ersten Druckregler (18) in Reihe mit dem Restdruckventil (19) umfasst.

10. Gasdruckzylinderhahn nach Anspruch 9, wobei der erste Druckregler (18) einen Druckminderungsmechanismus zum Senken des Gasdrucks zwischen einem Hochdruckeinlass und einem Niederdruckauslass umfasst, wobei der Druckminderungsmechanismus ein Ventil nach einem der Ansprüche 1 bis 7 umfasst.

11. Gasdruckzylinderhahn nach einem der Ansprüche 9 bis 10, wobei die Ausscheideschaltung (14) einen zweiten Druckregler (21) in Reihe mit dem ersten Druckregler (18) umfasst.

12. Gasdruckzylinderhahn nach Anspruch 11, wobei die Ausscheideschaltung (14) ein Restdruckventil (19) in Reihe zwischen den zwei Druckreglern (18, 21) umfasst.

## Revendications

1. Soupape, en particulier pour un robinet de bouteille de gaz sous pression, comprenant un corps (1) renfermant un passage de gaz (2), un obturateur (4) mobile dans le passage de gaz (2) le long d'une direction amont/aval par rapport à un siège (3), l'obturateur (4) étant mobile entre une première position amont fermant le passage de gaz (2) et une seconde position aval ouvrant le passage de gaz (2), la soupape comprenant un organe de rappel (5) pressant l'obturateur (4) vers la première position amont, l'obturateur (4) comprenant un corps de forme oblongue, l'organe de rappel (5) comprenant un ressort de compression monté sur le corps de l'obturateur, le ressort de compression (5) comprenant une extrémité amont appuyant sur une surface de support (6) de l'obturateur (4) et une extrémité avale appuyant sur un anneau de support (7) monté avec faculté de coulissement autour du corps de l'obturateur, la position de l'anneau de support (7) dans le passage de gaz (2) étant bloquée dans la direction aval par une butée fixe (8) située dans le passage de gaz (2), dans laquelle la soupape comprend un élément d'amortissement déformable (9) situé sur le corps de l'obturateur entre l'anneau de support (7) et la butée (8), **caractérisée en ce que** l'élément d'amortissement (9) comprend un joint torique constitué d'au moins l'un des matériaux suivants : le plastique, le caoutchouc, et la butée (8) comprend une surface conique convergeant vers la direction aval, l'élément d'amortissement (9) étant pressé sur ladite surface conique par l'anneau de support (7) poussé par l'organe de rappel (5).

2. Soupape selon la revendication 1, dans laquelle l'anneau de support (7) comprend une rondelle constituée d'au moins l'un des matériaux suivants : le cuivre, un alliage de cuivre, l'acier, un alliage d'acier, le nickel, un alliage de nickel, l'aluminium, un alliage d'aluminium, le PTFE, le polyamide, l'ABS, le polypropylène, des matériaux métalliques, des matériaux thermoplastiques, des caoutchoucs.

3. Soupape selon l'une quelconque des revendications 1 à 2, dans laquelle l'anneau de support (7) est flexible dans la direction radiale perpendiculaire à la direction amont/aval.

4. Soupape selon l'une quelconque des revendications 1 à 3, dans laquelle l'extrémité aval maximale de l'obturateur (4) est située dans un trou borgne situé dans le fond de la butée (8).

5. Soupape selon l'une quelconque des revendications 1 à 4, dans laquelle l'extrémité aval de l'obturateur (4) comprend un joint d'étanchéité (10) pour une coopération d'étanchéité sélective avec le siège (3) lorsque l'obturateur (4) est dans sa première position.

6. Soupape à pression résiduelle **caractérisée en ce qu'**elle comprend une soupape selon l'une quelconque des revendications 1 à 5.

7. Régulateur de pression comprenant un mécanisme réducteur de pression destiné à abaisser une pression de gaz entre une admission haute pression et un refoulement basse pression, **caractérisé en ce que** le mécanisme réducteur de pression comprend une soupape selon l'une quelconque des revendications 1 à 5.

8. Robinet de bouteille à gaz sous pression comprenant un corps (11) incluant une extrémité de montage (12) destinée à une fixation dans l'ouverture d'un cylindre de fluide sous pression (13), un circuit de soutirage interne (14) comprenant une première extrémité amont (15) sortant au niveau de l'extrémité de montage (12) et une seconde extrémité aval (16) sortant au niveau d'un orifice de refoulement (17) situé sur le corps (1), le circuit de soutirage (14) comprenant, agencées en série, une soupape d'isolement (20) et une soupape à pression résiduelle (19), **caractérisé en ce que** la soupape à pression résiduelle (19) est conforme à la soupape de l'une quelconque des revendications 1 à 6.

9. Robinet de bouteille à gaz sous pression selon la revendication 10, dans lequel le circuit de soutirage (14) comprend un premier régulateur de pression (18) en série avec la soupape à pression résiduelle (19).

10. Robinet de bouteille à gaz sous pression selon la revendication 9, dans lequel ledit premier régulateur de pression (18) comprend un mécanisme réducteur de pression destiné à abaisser une pression du gaz entre une admission haute pression et un refoulement basse pression, ledit mécanisme réducteur de pression comprenant une soupape selon l'une quelconque des revendications 1 à 7.

11. Robinet de bouteille à gaz sous pression selon l'une quelconque des revendications 9 à 10, dans lequel le circuit de soutirage (14) comprend un second régulateur de pression (21) en série avec le premier régulateur de pression (18).

12. Robinet de bouteille à gaz sous pression selon la revendication 11, dans lequel le circuit de soutirage (14) comprend une soupape à pression résiduelle (19) en série entre les deux régulateurs de pression (18, 21).
